# EUROPEAN PATENT APPLICATION

(11) **EP 2 754 363 A1**
(43) Date of publication of application: **16.07.2014**
(21) Application number: 14150606.3
(22) Date of filing: 09.01.2014
(51) Int. Cl.: A41B 11/00, B29C 41/14

(54) **Waterproof and breathable sock and method of manufacturing the same**

(30) Priority: 15.01.2013 TW 102101497
(71) Applicant: High State Industry Co., Ltd., Taichung City (TW)
(72) Inventor: Wu, Tsung-Ta, West Dist. Taichung City (TW)
(74) Representative: Pallini Gervasi, Diego

(57) **Abstract**

A manufacturing method of a waterproof and breathable sock has a step of preparing a mold (S1). Then, the mold is soaked into the rubber material (S2). Then, the rubber material cohering to the mold is dried to form into a waterproof and breathable layer (S3). Then, an inside woven fabric is combined on the waterproof and breathable layer (S4). Then, the inside woven fabric and the waterproof and breathable layer are reversed inside out and stripped off from the mold (S5). Then, the inside woven fabric and the waterproof and breathable layer are mounted on the mold (S6). Then, an outside woven fabric is combined on the waterproof and breathable layer (S7). Finally, the inside woven fabric, the waterproof and breathable layer, and the outside woven fabric are stripped off from the mold (S8).

## Description

### 1. Field of the Invention

The present invention relates to a manufacturing method of a sock, and more particularly to a waterproof and breathable sock and a method of manufacturing the same.

### 2. Description of Related Art

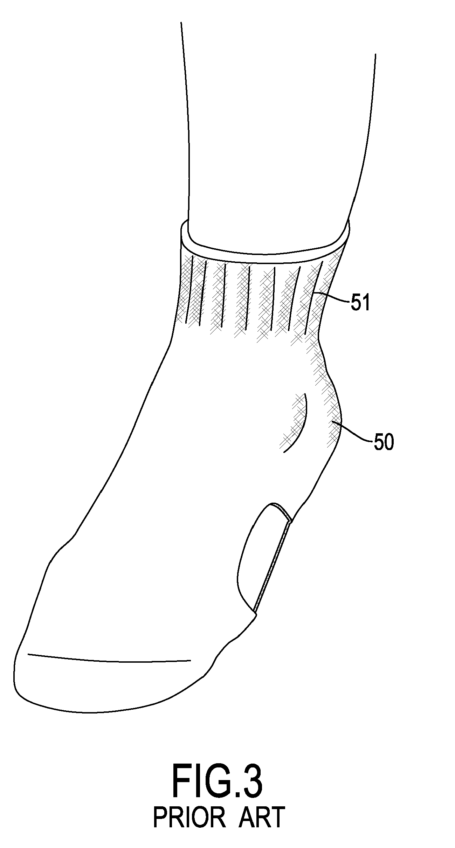

With reference to Fig. 3, a conventional sock 50 is absorbent and is woven into a shape according to a contour of a user's foot. The sock 50 has multiple patterns 51 formed at a top of the sock 50. When the sock 50 is worn around the foot of the user, the patterns 51 are disposed at an ankle of the user to maintain a sufficient tightness around the ankle, such that the sock 50 cannot slide off the ankle easily. Furthermore, the sock 50 has an artistic effect due to the patterns 51.

The conventional sock 50 lacks a structure that can drain moistures out. Thus, when the sock 50 absorbs sweat of the user, the sock 50 is under a moist situation. Further, the conventional sock 50 lacks a structure that is waterproof, such that the conventional sock 50 may be wetted by water accidentally. The described situations may cause discomfort for the user, and may further cause skin infection such as athlete's foot.

On the other hand, the patterns may not necessarily be formed at the top of the conventional sock. For example: the patterns may be formed at a bottom of the conventional sock to form an anti-slip effect. Alternatively, the patterns may be a logo and may be formed at a side of the conventional sock. However, if the conventional sock has different patterns, the manufacturing process may be time consuming.

The main objective of the present invention is to provide a waterproof and breathable sock and a method of manufacturing the sock to resolve the above-mentioned problems.

The manufacturing method of a waterproof and breathable sock has steps of:
1) Preparing a mold.
2) Soaking the mold into a rubber material: the mold is soaked into the rubber material, and the rubber material can cohere to a surface of the mold.
3) Drying the rubber material: the rubber material cohering to the surface of the mold is dried to form into a waterproof and breathable layer on the surface of the mold.
4) Combining an inside woven fabric: the inside woven fabric is combined on the waterproof and breathable layer.
5) Reversing the inside woven fabric and the waterproof and breathable layer: the inside woven fabric and the waterproof and breathable layer are reversed inside out and stripped off from the mold at the same time.
6) Mounting the inside woven fabric and the waterproof and breathable layer on the surface of the mold again: the inside woven fabric and the waterproof and breathable layer are mounted on the surface of the mold, wherein the inside woven fabric abuts the mold.
7) Combining an outside woven fabric: the outside woven fabric is combined on the waterproof and breathable layer opposite to the inside woven fabric.
8) Stripping off the inside woven fabric, the waterproof and breathable layer, and the outside woven fabric: the inside woven fabric, the waterproof and breathable layer, and the outside woven fabric are stripped off from the mold.

The waterproof and breathable sock manufactured by the said method has an inside woven fabric and a waterproof and breathable layer.

The inside woven fabric is soft and has an outer side. The waterproof and breathable layer is integrally combined on the outer side of the inside woven fabric.

Other objectives, advantages and novel features of the present invention will become more apparent from the following detailed description when taken in conjunction with the accompanying drawings.

### IN THE DRAWINGS

Fig. 1 is a preferred embodiment of a production process of a waterproof and breathable sock in accordance with the present invention;
Fig. 2 is a perspective view in partial section of the waterproof and breathable sock manufactured by the method in Fig. 1;
Fig. 2A is a partially enlarged cross sectional view of Fig. 2; and
Fig. 3 is a perspective view in partial section of the conventional waterproof and breathable sock.

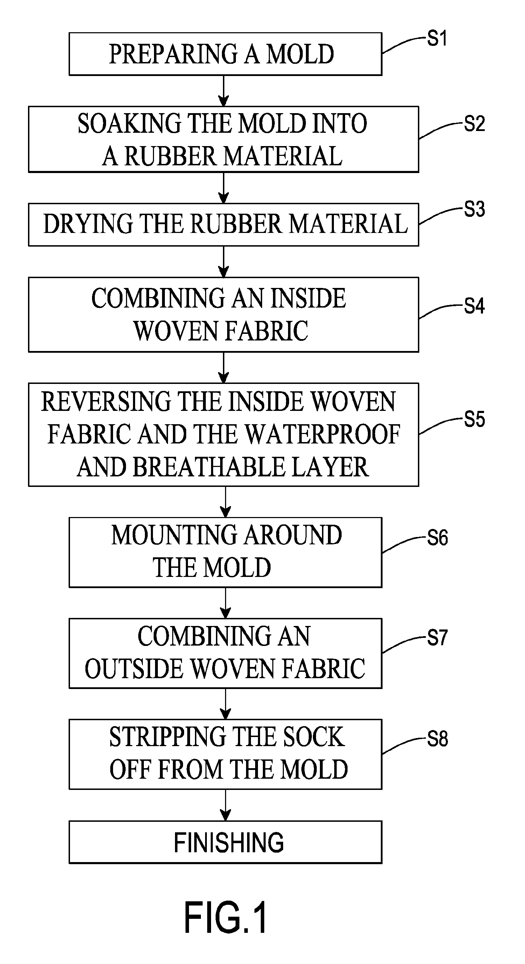

With reference to Fig. 1, a preferred embodiment of a waterproof and breathable sock in accordance with the present invention has steps as follows.
1. A mold is prepared (S1). The mold is shaped as a sole, and a size of the mold is determined according to a foot size of a user. A surface of the mold may be smooth, matted, or may have patterns.
2. The mold is soaked into a rubber material (S2), such that the rubber material can cohere to the surface of the mold. The rubber material may be PU (Polyurethane), NR (natural rubber), NBR (Nitrile Butadiene Rubber), Neoprene, PVA (Polyvinyl Alcohol), Viton or PVC (Polyvinylchloride).
   PU, NR, NBR, Neoprene, PVA, Viton, and PVC are all waterproof and breathable. Furthermore, NR is wearable, anti-acid and anti-alkali. NBR is wearable and cut-resistant. Neoprene is weather resistant and seawater-resistant. PVA is wearable, cut-resistant and organic-solvent resistant. Viton is anti-acid, anti-alkali, and chemical-resistant. PVC can be dyed or printed easily and is inexpensive.
3. The rubber material cohering to the surface of the mold is dried (S3), such that the rubber material can be formed into a waterproof and breathable layer on the surface of the mold. The waterproof and breathable layer has a pattern matching the surface of the mold.
4. An inside woven fabric is combined with a surface of the waterproof and breathable layer (S4). When the inside woven fabric is combined on the waterproof and breathable layer, a structure of the inside woven fabric matches the structure of the waterproof and breathable layer.
5. The inside woven fabric and the waterproof and breathable layer are reversed inside out and stripped off from the mold at the same time (S5), such that the inside woven fabric forms an interior part of the sock in accordance with the present invention, and the waterproof and breathable layer is located at an outer side of the inside woven fabric.
6. The inside woven fabric and the waterproof and breathable layer are mounted around the mold again (S6), wherein the inside woven fabric abuts the mold.
7. An outside woven fabric is combined with the waterproof and breathable layer (S7) opposite to the inside woven fabric to form the sock. When the outside woven fabric is combined with the waterproof and breathable layer, a structure of the outside woven fabric matches the structure of the waterproof and breathable layer.
8. The sock (the combined inside woven fabric, the waterproof and breathable layer, and the outside woven fabric) is stripped off form the mold (S8).

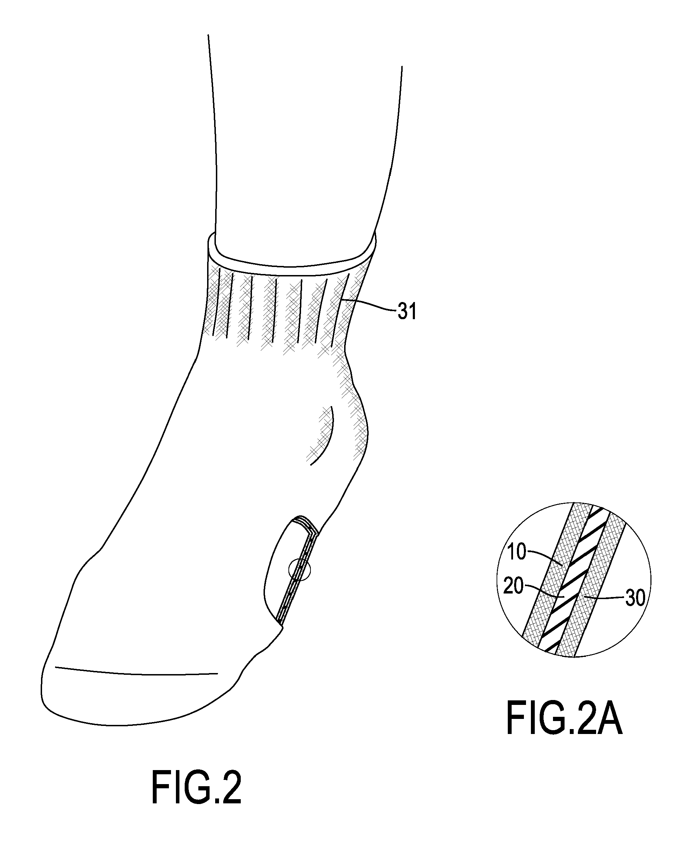

With reference to Figs. 2 and 2A, a sock manufactured by the above-mentioned method has an inside woven fabric 10, a waterproof and breathable layer 20, and an outside woven fabric 30.

The inside woven fabric 10 is molded into a shape of a sole, is integrally molded, is a soft woven fabric to provide a moisture-absorbing, warm, and shock-absorbing effect. The inside woven fabric 10 may have patterns.

The waterproof and breathable layer 20 is also molded into a shape of a sole and is integrally combined on an outer side of the inside woven fabric 10. The waterproof and breathable layer 20 may have patterns matching the patterns of the inside woven fabric 10.

The outside woven fabric 30 is also molded into a shape of a sole, is a soft woven fabric, and is combined on an outer side of the waterproof and breathable layer 20. The outside woven fabric 30 may have patterns 31 matching the patterns of the waterproof and breathable layer 20.

From the above description, it is noted that the present invention has the following advantages:
1.The sock provides a waterproof and breathable effect due to the waterproof and breathable layer 20. The sock can absorb sweat of a user and can drain moistures out of the sock when the sock is worn on a foot of the user. The sock can keep water from moistening the inside woven fabric 10, such that the foot of the user can be maintained under a dry situation.
2.The patterns can be formed when each woven fabric or layer is manufactured. First, in the step of drying the rubber material (S3), the patterns of the waterproof and breathable layer 20 matching the patterns of the mold can be formed when drying. Second, in the step of combining an inside woven fabric (S4), the patterns of the inside woven fabric 10 matching the patterns of the waterproof and breathable layer 20 can be formed when combining. Finally, in the step of combining an outside woven fabric (S7), the patterns of the outside woven fabric 30 matching the patterns of the waterproof and breathable layer 20 can be formed when combining. Therefore, the patterns that may have a logo, an anti-slide structure, and so on can be formed without an extra process. The manufacturing time of the method can be reduced effectively.

Even though numerous characteristics and advantages of the present invention have been set forth in the foregoing description, together with details of the structure and function of the invention, the disclosure is illustrative only, and changes may be made in detail, especially in matters of shape, size, and arrangement of parts within the principles of the invention to the full extent indicated by the broad general meaning of the terms in which the appended claims are expressed.

## Claims

1. A manufacturing method of a waterproof and breathable sock, **characterized in that** the manufacturing method has steps of:
preparing a mold (S1);
soaking the mold into a rubber material (S2), and the rubber material cohering to a surface of the mold;
drying the rubber material on the surface of the mold (S3), and the rubber material being dried to form into a waterproof and breathable layer on the surface of the mold;
combining an inside woven fabric with the waterproof and breathable layer (S4);
reversing the inside woven fabric and the waterproof and breathable layer and stripping the inside woven fabric and the waterproof and breathable layer off from the mold at the same time (S5);.
mounting the inside woven fabric and the waterproof and breathable layer on the surface of the mold again (S6), wherein the inside woven fabric abuts the mold;
combining an outside woven fabric with the waterproof and breathable layer opposite to the inside woven fabric (S7); and
stripping the inside woven fabric, the waterproof and breathable layer, and the outside woven fabric off from the mold (S8).

2. The manufacturing method as claimed in claim 1, wherein in the step of preparing a mold (S1), the surface of the mold forms patterns.

3. The manufacturing method as claimed in claims 1 or 2, wherein in the step of soaking the mold into a rubber material (S2), the rubber material is made of PU, NR, NBR, Neoprene, PVA, Viton or PVC.

4. A waterproof and breathable sock manufactured by the method as claimed in claim 1, **characterized in that** the waterproof and breathable sock has:
an inside woven fabric (10) being soft and having an outer side;
a waterproof and breathable layer (20) integrally combined on the outer side of the inside woven fabric (10) and having an outer side; and
an outside woven fabric (30) being soft and combined on the outer side of the waterproof and breathable layer (20).

5. The waterproof and breathable sock as claimed in claim 4, wherein the inside woven fabric (10), the waterproof and breathable layer (20), and the outside woven fabric (30) have patterns that match each other.

6. The waterproof and breathable sock as claimed in claims 4 or 5, wherein the waterproof and breathable layer (20) is made of PU, NR, NBR, Neoprene, PVA, Viton or PVC.
